# EUROPÄISCHE PATENTSCHRIFT

(11) **EP 4 396 475 B1**
(45) Veröffentlichungstag und Bekanntmachung des Hinweises auf die Patenterteilung: **25.06.2025**
(21) Anmeldenummer: 22746979.8
(22) Anmeldetag: 05.07.2022
(51) Int. Cl.: F16H 63/18, B62M 11/16, B62M 11/18, F16H 63/30, F16H 3/54, F16H 61/36

(54) **GETRIEBEEINHEIT FÜR EIN ZWEIRAD**
GEAR UNIT FOR A TWO-WHEELED VEHICLE
UNITÉ D'ENGRENAGE POUR UN VÉHICULE À DEUX ROUES

(30) Priorität: 01.09.2021 DE 102021122592
(43) Veröffentlichungstag der Anmeldung: 10.07.2024
(73) Patentinhaber: REVOLUTE GmbH, 34127 Kassel (DE)
(72) Erfinder: SCHLERETH, Daniel, 97702 Münnerstadt (DE); BRAUN, Caspar, 34119 Kassel (DE); BENDEROTH, Maximilian, 40233 Düsseldorf (DE)
(74) Vertreter: Walther Bayer Faber Patentanwälte PartGmbB
(86) Internationale Anmeldenummer: PCT/EP2022/068623
(87) Internationale Veröffentlichungsnummer: WO 2023/030724

(56) Entgegenhaltungen:
- EP-A1- 2 718 174
- EP-B1- 0 910 530
- DE-A1- 102009 060 484
- DE-B- 1 049 714
- US-A1- 2011 011 193

## Beschreibung

Die Erfindung betrifft ein Schaltsystem zur Beschaltung einer Getriebeeinheit, aufweisend wenigstens eine beweglich angeordnete Schaltwelle und mindestens ein Schaltmittel, wobei über eine Bewegung der Schaltwelle relativ zum Schaltmittel die Schaltstellung des Schaltmittels änderbar ist, wobei eine um eine Mittelachse rotierbare Antriebswelle als Teil des Schaltsystems so eingerichtet ist, dass diese in einer ersten Schaltstellung des Schaltmittels wenigstens in einer Drehrichtung mit einer Komponente der Getriebeeinheit drehfest verbunden ist und in einer zweiten Schaltstellung des Schaltmittels in jeder Drehrichtung mit der Komponente der Getriebeeinheit entkoppelt ist, und wobei das Schaltmittel in Verbindung mit der Antriebswelle derart eingerichtet ist, dass wenigstens ein Teil des Schaltmittels mit einer Rotation der Antriebswelle (18) um die Mittelachse mitrotiert.

### STAND DER TECHNIK

Die EP 0 915 800 B1 zeigt ein gattungsbildendes Schaltsystem zur Beschaltung einer Getriebeeinheit eines Fahrrades, das an einem Rahmen des Fahrrades angebracht werden kann. Die Getriebeeinheit bildet dabei eine Radnabe, sodass das angetriebene Rad des Fahrrades über die Getriebeeinheit gelagert werden kann und die Speichen des Rades können an einem Gehäuse der Getriebeeinheit angebracht werden.

Der Gangwechsel erfolgt mittels einer Schalteinheit durch die Beschaltung von Schaltmitteln, um einzelne Komponenten eines Planetengetriebes der Getriebeeinheit beispielsweise an einer Durchgangswelle, am Gehäuse oder an einer ruhenden Durchgangswelle der Getriebeeinheit festzusetzen und wahlweise freizugeben. Dabei sind die Komponenten der Planetengetriebe mit Freiläufen versehen, sodass eine Wechselwirkung zwischen der Beschaltung der Schaltmittel und den Freiläufen das Einstellen mehrerer Gänge der Getriebeeinheit ermöglicht.

Das Schaltsystem weist als Durchgangswelle eine stehende Hohlwelle auf, die am Rahmen des Zweirades angeschraubt wird, und in die Hohlwelle wird eine Nockenwelle eingesetzt, die vom Fahrer des Fahrrades über einen Drehaktivator schrittweise in Drehbewegung versetzt werden kann, um in verschiedenen Drehpositionen der Nockenwelle die Schaltklinken in die Komponenten der Planetengetriebe in Eingriff und außer Eingriff zu bringen.

Um ein Schaltmittel außer Eingriff mit der Komponente des Planetengetriebes zu bringen, muss der Kraftfluss vom Antrieb unterbrochen werden, da über die Schaltkraft des Drehaktivators zur Rotation der Nockenwelle in der Regel nicht genügend Kraft zur Verfügung steht. Nachteilhafterweise muss daraus folgend eine Unterbrechung des Leistungsdurchsatzes des Getriebes erfolgen, was insbesondere bei einer Bergfahrt mit einem Fahrrad unerwünscht ist.

Ein weiteres Beispiel einer mit einem Schaltsystem beschaltbaren Getriebeeinheit ist aus der EP 0 910 530 B1 bekannt. Auch diese Ausführung der Getriebeeinheit dient als Radnabe für das angetriebene Rad eines Fahrrades, und derartige Radnabengetriebe dienen als Alternative zu einer Kettenschaltung. Der Vorteil derartiger Schaltsysteme in Verbindung mit einer Getriebeeinheit liegt in der kompakten, geschlossenen Bauweise, sodass eine schmutzempfindliche und wartungsintensive Kettenschaltung entfallen kann, und sodass diese für Fahrräder, jedoch auch für Zweiräder sonstiger Art, beispielsweise Elektro-Fahrräder, Elektro-Roller, Elektro-Motorräder oder auch konventionelle Motorräder mit Brennkraftmaschine Anwendung finden kann.

Ein weiteres Schaltsystem ist aus der DE 10 2009 060 484 A1 bekannt. wobei das Schaltsystem zur Beschaltung einer Getriebeeinheit dient und wenigstens eine beweglich angeordnete Schaltwelle und mindestens ein Schaltmittel aufweist, wobei über eine Bewegung der Schaltwelle relativ zum Schaltmittel die Schaltstellung des Schaltmittels änderbar ist, wobei eine um eine Mittelachse rotierbare Antriebswelle als Teil des Schaltsystems eingerichtet ist, die in einer ersten Schaltstellung des Schaltmittels wenigstens in einer Drehrichtung mit einer Komponente der Getriebeeinheit drehfest verbindbar ist und in einer zweiten Schaltstellung des Schaltmittels in jeder Drehrichtung mit der Komponente der Getriebeeinheit entkoppelbar ist, und wobei das Schaltmittel in Verbindung mit der Antriebswelle derart eingerichtet ist, dass wenigstens ein Teil des Schaltmittels mit einer Rotation der Antriebswelle um die Mittelachse mitrotiert. Nachteilhafterweise muss zum Wechsel der Schaltstellung des Schaltmittels eine Relativverdrehung der Schaltwelle zur Antriebswelle erzeugt werden, was über ein Planetengetriebe erfolgt, das mittels eines vom Bediener betätigten Seilzuges, insbesondere einem Bowdenzug, erfolgen muss. Sind die Schaltmittel unter Last gesetzt, also wenn ein Drehmomentdurchsatz erfolgt, dann können die Klemmkräfte der Schaltmittel in den Schaltpartnern sehr groß werden, sodass eine Beschaltung der Schaltmittel unter Last mittels eines Bowdenzuges, einer Ölsäule, einer Kette oder dergleichen unmöglich wird.

Weitere Schaltsysteme der hier interessierenden Art sind aus der EP 0 910 530 B1, der US 2011/011193 A1, der EP 2 718 174 A1 oder der DE 10 49 714 B bekannt geworden.

Bekannte Schaltsysteme sind dabei so aufgebaut, dass grundsätzlich der Leistungsdurchsatz, mithin also das Drehmoment an der Antriebswelle, unterbrochen werden muss, um einen Gangwechsel auszuführen. Das liegt insbesondere an einem Kraftfluss durch das Schaltmittel selbst, das für einen Gangwechsel in und außer Eingriff mit einer Komponente der Getriebeeinheit gebracht werden muss, wobei die Bewegung des Schaltmittels durch eine Bedienkraft eines Bedieners hervorgerufen werden muss. Befindet sich ein Schaltmittel im Kraftfluss mit der Komponente des Getriebes, insbesondere wenn an der Antriebswelle ein Drehmoment anliegt, und soll ein Gangwechsel erfolgen, so muss der Eingriff des Schaltmittels aus der Komponente des Getriebes mit großer Kraft gelöst werden, was mittels eines Bowdenzuges oder dergleichen nicht möglich ist.

### OFFENBARUNG DER ERFINDUNG

Die Aufgabe der Erfindung liegt in der Verbesserung eines Schaltsystems und einer mit einem solchen Schaltsystem beschaltbaren Getriebeeinheit, das bzw. die insbesondere geeignet ist für ein Zweirad, vorzugsweise für ein Fahrrad, wobei die Gangwechsel der Getriebeeinheit auch ohne Lastunterbrechung möglich sein sollen.

Diese Aufgabe wird ausgehend von einem Schaltsystem gemäß dem Oberbegriff des Anspruchs 1 und ausgehend von einer Getriebeeinheit gemäß Anspruch 12 in Verbindung mit den jeweils kennzeichnenden Merkmalen gelöst. Vorteilhafte Weiterbildungen der Erfindung sind in den abhängigen Ansprüchen angegeben.

Die Erfindung schlägt zur Lösung der Aufgabe vor, dass durch den mit der Antriebswelle mitrotierenden Teil des Schaltmittels eine Relativbewegung des Schaltmittels zur Schaltwelle erzeugt wird, sodass die Bewegung des Schaltmittels zwischen der ersten und der zweiten Schaltstellung durch eine abgezweigte Kraft aus der Antriebsbewegung der Antriebswelle erfolgt.

Kerngedanke der Erfindung ist die Nutzung der Antriebskraft bzw. des Antriebsdrehmomentes in der extern antreibbaren Antriebswelle, um eine Bewegung des Schaltmittels herbeizuführen, sodass zwischen der ersten Schaltstellung und der zweiten Schaltstellung des Schaltmittels gewechselt werden kann. Es wird gewissermaßen ein kleiner Teil der Antriebsleistung in der Antriebswelle abgezweigt, um die Bewegung des Schaltmittels, insbesondere von der ersten Schaltstellung in die zweite Schaltstellung, zu erzeugen.

Hierfür wird erfindungsgemäß vorgeschlagen, dass das Schaltmittel in Verbindung mit der Antriebswelle eingerichtet ist, also insbesondere mit der Antriebswelle verbunden oder in oder an dieser angeordnet ist, sodass wenigstens ein Teil des Schaltmittels mit der Antriebswelle mitrotiert, vorzugsweise das gesamte Schaltmittel. Durch die Rotation des Schaltmittels mit der Antriebswelle kann eine Relativbewegung des Schaltmittels mittels der Schaltwelle erzeugt werden, sodass die Schaltwelle das Schaltmittel beschalten kann, ohne dass in die Schaltwelle große Kräfte oder Drehmomente eingeleitet werden müssen, um das Schaltmittel zu bewegen, denn die Bewegung des Schaltmittels erfolgt durch eine abgezweigte Kraft aus der Antriebsbewegung der Antriebswelle.

Das Schaltmittel kann einteilig ausgeführt sein, beispielsweise in Form eines einteiligen Schaltmittels, oder das Schaltmittel ist mehrteilig aufgebaut, sodass wenigstens ein Teil des mehrteiligen Schaltmittels mit der Antriebswelle mitrotiert. Im einfachsten und bevorzugten Fall rotiert das gesamte Schaltmittel als einteiliges Schaltmittel mit der Antriebswelle mit, indem das Schaltmittel in oder an der Antriebswelle beweglich aufgenommen ist und dieses so die Rotation der Antriebswelle um die Mittelachse mit ausführt.

Dabei wird lediglich die Schaltwelle mit einem entsprechenden Mittel verbunden, über das ein Bediener die Schaltwelle bewegen kann, wobei die Schaltwelle für ihre Funktion selbst keine großen Schaltkräfte erfordert. Die Schaltwelle gelangt lediglich in Kontakt mit einem Teil, mit einer Funktionsfläche oder einem Funktionsabschnitt des Schaltmittels, und gemäß dem Grundgedanken der Erfindung kann die Schaltwelle in gewisser Weise die Funktionsumgebung des Schaltmittels so ändern, dass das Schaltmittel die gewünschte Bewegung zwischen der ersten Schaltstellung und der zweiten Schaltstellung ausführt, insbesondere von der ersten Schaltstellung in die zweite Schaltstellung.

Die Schaltwelle stellt hierfür eine entsprechende Geometrie bereit, die durch Verlagerung der Schaltwelle entweder radial oder axial wenigstens zum Teil in den Bewegungsbereich, insbesondere in die Umlaufbahn um die Mittelachse, des mit der Antriebswelle mitrotierenden Schaltmittels mit hineingelangt, um auf das Schaltmittel entsprechend einzuwirken und um die Schaltstellung zu ändern.

Gemäß einer vorteilhaften Ausführung des Schaltsystems verfügt zumindest der mit der Antriebswelle rotierende Teil des Schaltmittels oder das gesamte einteilige Schaltmittel über mindestens einen mit der Schaltwelle in Kontakt stehenden Abgriff. Über die Bewegung der Schaltwelle kann so der Abgriff in Bezug auf die Mittelachse des Schaltsystems, die vorzugsweise auch die Mittelachse der Getriebeeinheit bildet, axial und/oder radial verlagert werden, um schließlich das Schaltmittel in der Schaltstellung zu ändern, insbesondere um das Schaltmittel von der ersten Schaltstellung in die zweite Schaltstellung zu überführen.

Der Abgriff kann als geometrische Ausgestaltung am Schaltmittel selbst ausgebildet sein, insbesondere, wenn das Schaltmittel als Schaltklinke einteilig ausgeführt ist. Der Abgriff kann als ein Abgriffskopf ausgeführt sein, über den das Schaltmittel mit der Schaltwelle in Kontakt gelangt.

Im Rahmen einer möglichen weiteren Ausführung des Schaltsystems weist die Schaltwelle mindestens eine Rampe auf, oder es ist ein Rampenelement vorgesehen, das in Wechselwirkung mit der Schaltwelle steht. Die Rampe kann als einzelnes Bauteil bereitgestellt sein, das mit der Schaltwelle in Wechselwirkung tritt, oder die Rampe ist vorteilhafterweise an der Schaltwelle selbst ausgebildet. Der Abgriff als Teil oder in Anordnung am Schaltmittel kann in Kontakt mit der Rampe gelangen, sodass der Abgriff und damit auch ein Teil des Schaltmittels axial und/oder radial relativ zur Mittelachse des Schaltsystems verlagerbar ist, wobei eine Verlagerung der Rampe mittels der Bewegung der Schaltwelle erzeugt werden kann.

Die Rampe ist vorteilhafterweise als umlaufend wirkende Rampe ausgeführt, sodass der Abgriff mit Bezug auf die Mittelachse radial vermittels der Rotationsbewegung der Antriebswelle bewegt wird. Es ist aber auch denkbar, dass die Rampe axial wirkend ausgeführt ist, oder die Rampe ist so ausgeführt, dass der Abgriff axial und radial verlagert wird. Im Rahmen der Erfindung kann die Rampe insofern jede geometrische Ausgestaltung umfassen, die geeignet ist, den Abgriff entweder radial oder axial zur Mittelachse so zu verlagern, dass auch eine Verlagerung wenigstens eines Teiles oder eines gesamten Schaltmittels erfolgt, und sodass durch diese Verlagerung das Schaltmittel zwischen der ersten Schaltstelle und der zweiten Schaltstelle wechseln kann, insbesondere von der ersten Schaltstellung in die zweite Schaltstellung überführt werden kann. Denkbar sind in diesem Zusammenhang auch Spreizhülsen, Kegelelemente, Konuselemente und dergleichen, vorzugsweise auch mit elastisch verformbaren Abschnitten, um eine Rampe bereitzustellen, die in radialer Betrachtung einen Durchmesser ändern kann, ähnlich einem Ein- und Ausatmen. Denkbar ist weiterhin eine mit Fluid beaufschlagbare Einrichtung, beispielsweise mittels Drucköl, um eine Rampe in einer radialen Position oder einem Durchmesser vorübergehend zu ändern.

Ein wesentlicher Aspekt bei der geometrischen Ausgestaltung der Schaltwelle in Verbindung mit dem Schaltmittel und/oder dem Abgriff sieht vor, dass die Bewegungsrichtung, in welcher die Schaltwelle die Rampe in Kontakt mit dem Abgriff bewegt, und die Betätigungsrichtung des Abgriffs, insbesondere als Teil des Schalmittels, senkrecht zueinander verlaufen. Die Kraft auf die Schaltwelle wird in ihrer Bewegungsrichtung gemeinsam mit der Rampe vom Bediener in die Schaltwelle eingeleitet, sodass die Kraft zur Bewegung der Schaltwelle eher gering ausfällt. Hingegen muss der Abgriff und damit auch ein Teil des Schaltmittels oder das Schaltmittel selbst in seiner Betätigungsrichtung mit einer großen Kraft bewegt werden, wobei die große Kraft im Verhältnis zur kleinen Kraft der Bewegung der Schaltwelle über die Geometrie an der Schaltwelle erzeugt wird, insbesondere über die Rampe. Die große Kraft wird dabei von der Antriebskraft oder dem Antriebsmoment der Antriebswelle bereitgestellt, wobei die kleine Kraft durch den Bediener eingeleitet wird, beispielsweise mittels eines Drehaktivators.

Das Schaltsystem kann insbesondere auch mit einem elektrischen Aktuator geschaltet werden, sodass die Schaltwelle beispielsweise nicht über Bowdenzüge von einer Person in Bewegung versetzt wird, sondern mittels eines elektrischen Aktuators. Der elektrische Aktuator kann dabei auch Teil des Schaltsystems sein, und der elektrische Aktuator kann beispielsweise nach dem Remote-Prinzip schließlich vom Bediener angesteuert werden.

Um auch bei stehendem Getriebe das Schaltsystem so auszuführen, dass ein Gangwechsel erfolgen kann, kann die Schaltwelle derart ausgeführt ist, dass der Abgriff des Schaltmittels mittels der Schaltbewegung der Schaltwelle unabhängig von der Drehbewegung der Antriebswelle zwischen der ersten Schaltstellung und der zweiten Schaltstellung bewegbar ist, insbesondere mittels wenigstens einer axial-schräg ausgebildeten Rampe an der Schaltwelle.

Die axial-radial, d.h. axial und kegel- oder konusaritg ausgebildete Rampe kann angrenzend an oder baueinheitlich mit der Rampe ausgeführt sein, die eine Schrägfläche zwischen den Umfangsflächen unterschiedlichen Durchmessers an der Schaltwelle bildet, zwischen denen der Abgriff in seinem Kontakt wechseln kann.

Die Rampe, die sich in Umfangsrichtung erstreckt und einen anwachsenden Radius bezogen auf die Mittelachse aufweist, kann das Schaltelement schalten, wenn das Schaltelement um die Mittelachse herum mit der Antriebswelle mitrotiert, und die axial-radiale Rampe, die zumindest abschnittsweise einen Kegel oder einen Konus bildet, kann das Schaltelement schalten, wenn das Schaltelement still steht und nicht um die Schaltwelle rotiert, jedoch wenn die Schaltwelle und damit die axial-radiale Rampe relativ zum Schaltmittel axial verlagert wird.

Das Schaltmittel kann als Klauenkupplung und vorzugsweise als Schaltklinke oder als Schaltklinkensystem ausgeführt sein. Insbesondere kann das Schaltmittel eine Schaltklinke bilden, die in eine Rastkontur oder Eingriffskontur in der Getriebekomponente eingreifen kann, die insbesondere auf einer Innenoberfläche ausgebildet ist, sodass die Getriebekomponente insofern das Schaltgegenmittel bildet. Folglich kann das Schaltmittel jedes Bauteil betreffen, das geeignet und eingerichtet ist, durch eine Bewegung zwischen zwei Schaltstellungen eine weitere Komponente mit der Komponente in wenigstens eine Richtung drehfest zu verbinden, in oder an der das Schaltmittel aufgenommen ist.

Der Schaltvorgang des Schaltmittels in die zweite Schaltstellung kann mittels des Kontaktes der Rampe mit dem Abgriff ausgeführt werden, wobei der Abgriff auch nur eine einfache Funktionsfläche am einteiligen Schaltmittel bilden kann. Der Schaltvorgang von der ersten Schaltstellung in die zweite Schaltstellung erfolgt folglich über den Rampenkontakt.

Hierfür kann insbesondere eine Spannfeder eingerichtet sein, die das Schaltmittel in die erste Schaltstellung drängt.

Bei der Überführung des Schaltmittels von der zweiten Schaltstellung außer Eingriff mit der Komponente der Getriebeeinheit in die erste Schaltstellung in Eingriff mit der Komponente der Getriebeeinheit kann dabei mit nur minimalem Kraftaufwand erfolgen, da sich das Schaltmittel, insbesondere also die Schaltklinke, die Klauenkupplung oder dergleichen, noch nicht im Kraftfluss befinden, der durch den Leistungsdurchsatz durch die Getriebeeinheit über die Antriebswelle erzeugt wird. Insofern erfolgt eine Überführung des Schaltmittels von der zweiten Schaltstellung in die erste Schaltstellung beispielhaft mit einer einfachen Spannfeder.

Mit weiterem Vorteil weist die Schaltwelle einen ersten Abschnitt mit einem kleineren Durchmesser und einen zweiten Abschnitt mit einem größeren Durchmesser auf. Die Abschnitte bilden insbesondere Abschnitte mit einer zylinderförmigen Mantelfläche, mithin also Ringabschnitte, die über den vollen Umfang einen gleichbleibenden Durchmesser aufweisen. Der Wechsel zwischen den Schaltstellungen des Schaltmittels kann dabei durch einen Kontaktwechsel des Schaltmittels und insbesondere des Abgriffs des Schaltmittels zwischen den Abschnitten über die Rampe erfolgen, sodass die Rampe den Abgriff des Schaltmittels oder das Schaltmittel selbst zwischen dem ersten Abschnitt und dem zweiten Abschnitt überführt.

Die Schaltwelle ist insbesondere mehrteilig ausgeführt, und vorteilhafterweise sind eine erste Schaltwelle und eine zweite Schaltwelle eingerichtet, die zueinander axial beweglich, jedoch drehstarr miteinander verbunden sind. Durch eine Unterteilung der Schaltwelle können die beiden Teile der Schaltwelle unterschiedliche Axialpositionen einnehmen, sodass mehrere Schaltmittel unabhängig voneinander durch mehrere Teile der Schaltwelle geschaltet werden können.

Insbesondere ist eine Durchgangswelle als Teil des Schaltsystems und/oder als Teil der Getriebeeinheit vorgesehen, die sich entlang der Mittelachse erstreckt und auf der die erste und die zweite Schaltwelle aufgenommen worden sind, wobei die erste Schaltwelle eine erste Führungskulisse aufweist, in der ein erstes in der Durchgangswelle angeordnetes Führungselement geführt ist. Weiterhin weist die zweite Schaltwelle eine zweite Führungskulisse auf, in der ein zweites an der Durchgangswelle angeordnetes Führungselement geführt ist. Folgerichtig können die Axialpositionen der ersten und/oder der zweiten Schaltwelle entlang der Mittelachse zueinander unabhängig verändert werden. Die Antriebswelle erstreckt sich ebenfalls um die Durchgangswelle und ist insbesondere auf dieser gelagert, wobei die Antriebswelle vorzugsweise als Hohlwelle ausgeführt ist, in die sich die Schaltwelle hinein erstreckt. Ferner ist die Schaltwelle vorzugsweise als Hohlwelle ausgeführt ist, durch die sich die Durchgangswelle hinein erstreckt.

Weiterhin weist das Schaltsystem vorteilhafterweise einen Drehaktivator auf, der eingerichtet ist, die Schaltwelle entsprechend zu bewegen, insbesondere in eine Drehbewegung zu versetzen. Der Drehaktivator ist insofern mit der Schaltwelle wirkverbunden, wobei der Drehaktivator von einem Bediener angesteuert werden kann. Beispielsweise weist der Drehaktivator Bowdenzüge auf. Mit dem Drehaktivator kann die Schaltwelle in Drehbewegung versetzt werden, wobei die Drehbewegung wiederum in eine Axialbewegung der Schaltwelle oder in Teilen der Schaltwelle überführt werden kann. Folglich kann bei einem Aktivieren des Drehaktivators die Schaltwelle oder Teile der Schaltwelle radial und/oder axial verlagert werden oder um die Mittelachse herumgedreht werden.

Die Erfindung richtet sich weiterhin auf eine Getriebeeinheit mit wenigstens einem Schaltsystem gemäß obiger Beschreibung, wobei die Getriebeeinheit wenigstens ein Planetengetriebe umfasst, insbesondere zwei Planetengetriebe, wobei die Komponente des Planetengetriebes, mit der die Antriebswelle mittels des Schaltmittels in wenigstens einer Drehrichtung der Getriebeeinheit drehfest verbindbar ist, als ein Hohlrad, als ein Planetenträger und/oder als ein Sonnenrad des wenigstens einen Planetengetriebes ausgeführt ist. Der Abtrieb des Planetengetriebes wird beispielsweise durch einen Planetenträger gebildet, wobei der Planetenträger als Komponente zur Beschaltung mittels des Schaltsystems der Planetenträger eines ersten Planetengetriebes ist, und wobei der Planetenträger zur Bildung des Abtriebs der Planetenträger eines zweiten Planetengetriebes ist.

Die zwei oder mehr miteinander verschachtelten Planetengetriebe sind insbesondere koaxial zueinander eingerichtet und insbesondere ineinander verschachtelt, wobei das Hohlrad, der Planetenträger und/oder das Sonnenrad vom ersten und/oder vom zweiten Planetengetriebe mittels des Schaltsystems beschaltbar sind, wobei auch mehr als zwei Planetengetriebe miteinander verschachtelt eingerichtet sein können.

Weiterhin kann ein erfindungsgemäßes Schaltsystem durch eine Freilaufeinheit, wirkend zwischen der jeweils beschalteten Komponente und einem fest stehenden Teil vom Schaltsystem, ergänzt werden. Ergänzend oder alternativ weist die Getriebeeinheit wenigstens einen Freilauf auf. Ein erster Freilauf kann eingerichtet sein, der eine Wirkverbindung zwischen dem Hohlrad des zweiten, außen liegenden Planetengetriebes und einem fest stehenden Teil der Getriebeeinheit zu bilden. Ein zweiter Freilauf kann eingerichtet sein, der eine Wirkverbindung zwischen dem Planetenträger des ersten, innen liegenden Planetengetriebes und dem fest stehenden Teil bildet, wobei auch insbesondere ein dritter Freilauf vorgesehen sein kann, der eine Wirkverbindung zwischen dem Sonnenrad des ersten, innen liegenden Planetengetriebes und der Antriebswelle bildet.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ersatzschaltbild eines Getriebes mit dem erfindungsgemäßen Schaltsystem,
- Figur 2: eine perspektivische Ansicht des Getriebes,
- Figur 3: einen Schnitt durch das Getriebe mit dem erfindungsgemäßen Schaltsystem,
- Figur 4: eine perspektivische Ansicht der Schalteinheit mit zwei Schaltwellen in Verbindung mit einem Drehaktivator, jedoch ohne die Antriebswelle,
- Figur 5: eine perspektivische Ansicht der Schalteinheit mit einer Schaltwelle in Verbindung mit dem Drehaktivator gemäß Figur 4, wobei ferner eine Antriebswelle gezeigt ist, sodass eine weitere Schaltwelle verdeckt ist,
- Figur 6: eine perspektivische Ansicht einer ersten Schaltwelle,
- Figur 7: eine perspektivische Ansicht eines als Schaltklinke ausgeführten Schaltmittels,
- Figur 8: eine weitere perspektivische Ansicht der Schalteinheit mit der Anordnung mehrerer Schaltklinken in Verbindung mit der Antriebswelle in Schnittdarstellung und
- Figur 8a: eine perspektivische Ansicht des Sonnenrades des inneren Planetengetriebes.

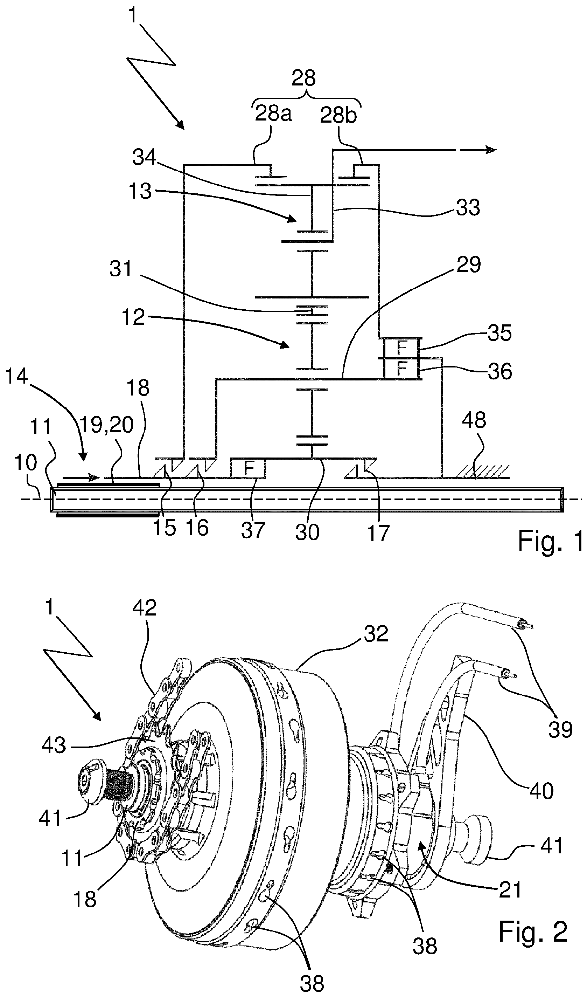

Figur 1 zeigt ein Ersatzschaubild einer Getriebeeinheit 1 in einem oberen Halbschnitt, wobei das erfindungsgemäße Schaltsystem 14 dargestellt ist. Als tragendes Element erstreckt sich durch die Getriebeeinheit 1 eine Durchgangswelle 11, die ruhend beispielsweise am Rahmen eines Zweirades angebracht werden kann, und sich insofern auch nicht drehen lässt. Die Durchgangswelle 11 erstreckt sich entlang einer Mittelachse 10, die zugleich die Rotationsachse der beiden Planetengetriebe 12 und 13 bildet. Das Planetengetriebe 12 formt ein inneres und das Planetengetriebe 13 formt ein äußeres Planetengetriebe, die insbesondere ineinander liegend ausgebildet sind.

Um die Durchgangswelle 11 herum erstreckt sich zumindest abschnittsweise eine Antriebswelle 18, die durch einen Fahrer oder durch einen Motor des Zweirades angetrieben werden kann und die einen Teil des Schaltsystems 14 bildet. Die Antriebswelle 18 nimmt die Schaltmittel 15 und 16 auf, wobei das Schaltmittel 15 mit einem Hohlrad 28 des Planetengetriebes 13 und das Schaltmittel 16 mit einem Planetenträger 29 des inneren Planetengetriebes 12 zusammenwirkt. Das Schaltmittel 17 wirkt mit einem Sonnenrad 30 des inneren Planetengetriebes 12 zusammen und ist an einem feststehenden Teil 48 der Getriebeeinheit 1 aufgenommen und schafft somit eine Wirkverbindung des inneren Sonnenrades 30 mit dem feststehenden Teil 48 und insofern auch mit der Durchgangswelle 11. Das Schaltmittel 17 ist damit auch Teil des Schaltsystems 14.

Das Hohlrad 28 des äußeren Planetengetriebes 13 ist mit Bezug auf die Erstreckungsrichtung der Mittelachse 10 in zwei Teile aufgeteilt, sodass sich ein erstes links dargestelltes Teilrad 28a und ein zweites rechts dargestelltes Teilrad 28b ergibt. Dadurch entsteht ein axialer Spalt zwischen den Teilrädern 28a und 28b, durch den hindurch der Abtrieb der Getriebeeinheit 1 geführt ist, wobei der Abtrieb in nicht näher gezeigter Weise durch das Gehäuse der Getriebeeinheit 1 gebildet, welches drehstarr gekoppelt ist mit dem äußeren Planetenträger 33 des zweiten Planetengetriebes 13. Beispielsweise kann der Abtrieb ein nicht näher dargestelltes Gehäuse der Getriebeeinheit bilden, das mit dem Planetenträger 33 durch den Spalt zwischen den Teilrädern 28a und 28b verbunden ist.

Die äußeren Planetenräder 34 greifen in beide Teilräder 28a, 28b des Hohlrades 28 ein, sodass die Teilräder 28a, 28b mittels der äußeren Planetenräder 34 drehstarr miteinander verbunden sind.

Das erste Planetengetriebe 12 ist innenseitig angeordnet und das zweite Planetengetriebe 13 außenseitig, wobei beide Planetengetriebe 12, 13 ineinander liegend angeordnet sind, und das Hohlrad des ersten, innen liegenden Planetengetriebes 12 ist baueinheitlich mit dem Sonnenrad des zweiten, außen liegenden Planetengetriebes 13 ausgebildet und bildet somit das Sonnenhohlrad 31.

Der feststehende Teil 48, an dem das Schaltmittel 17 aufgenommen ist und mit dem Sonnenrad 30 zusammenwirkt, kann auch als Teil der Durchgangswelle 11 ausgeführt werden, wobei mit Vorteil der feststehende Teil 48 ein einzelnes Bauteil oder eine Bauteilgruppe bildet, an deren auch die Freiläufe 35 und 36 angebunden sind, während der Freilauf 37 zwischen dem inneren Sonnenrad 30 und der Antriebswelle 18 eingerichtet ist. Der Freilauf 35 bildet eine Wirkverbindung des feststehenden Teils 48 mit dem Teilrad 28b, während der Freilauf 36 eine Wirkverbindung des feststehenden Teils 48 mit dem Planetenträger 29 bildet.

Figur 2 zeigt eine perspektivische Ansicht der Getriebeeinheit 1 mit einem Antrieb, gezeigt durch eine Kette 42, die über einem Kettenritzel 43 geführt ist, und das Kettenritzel 43 ist unmittelbar wirkverbunden mit der Antriebswelle 18. Durch die Getriebeeinheit 1 hindurch erstreckt sich die Durchgangswelle 11, die mit den Nabenschrauben 41 am Rahmen eines Zweirades, insbesondere eines Fahrrades, befestigt werden kann, sodass die Durchgangswelle 11 drehstarr und ruhend angeordnet wird. Dabei befindet sich in starrer Anordnung an der Durchgangswelle 11 ein Befestigungsarm 40, der ebenfalls am Rahmen des Zweirades angebracht wird, um auftretende Drehmomente in der Getriebeeinheit 1 abzustützen.

Die Ansteuerung der Getriebeeinheit 1 erfolgt über Bowdenzüge 39, die mit einem Drehaktivator 21 zusammenwirken, der ebenfalls starr mit der Durchgangswelle 11 verbunden ist und als Funktionseinheit dargestellt ist. Der Abtrieb der Getriebeeinheit 1 erfolgt über das Gehäuse 32, das Mittel 38 zur Aufnahme von Radspeichen aufweist.

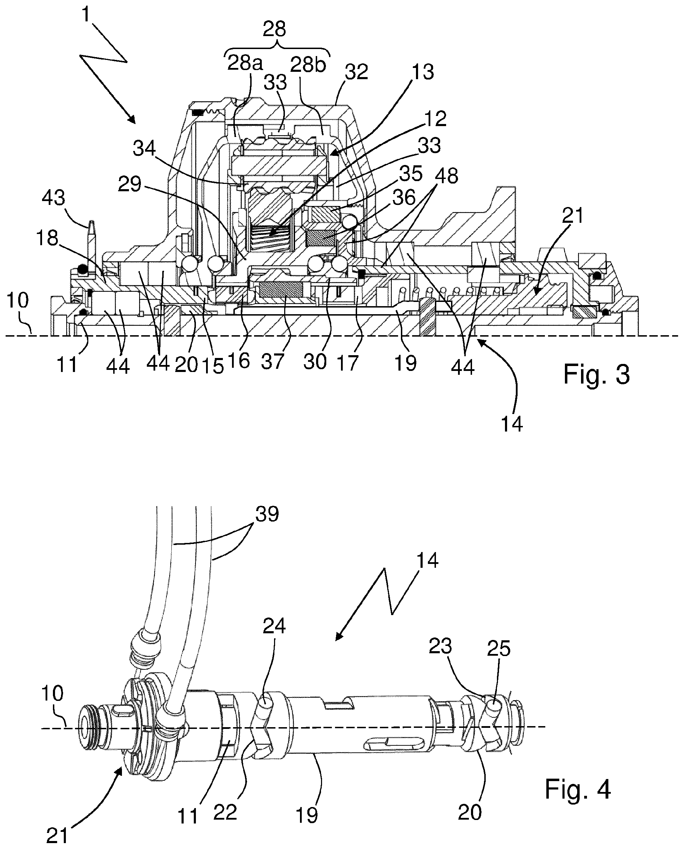

Figur 3 zeigt einen oberen Halbschnitt der Getriebeeinheit 1, und als wesentlicher Bestandteil ist wiederum die Durchgangswelle 11 gezeigt, die sich in der Mittelachse 10 erstreckt und starr am Rahmen des Zweirades anordenbar ist.

Um die Durchgangswelle 11 herum erstreckt sich abschnittsweise die hohl ausgeführte Antriebswelle 18, auf der das Kettenritzel 43 zum rotatorischen Antrieb der Antriebswelle 18 aufgenommen ist. Die Antriebswelle 18 ist mit den Wälzlagern 44 auf der Durchgangswelle 11 gelagert aufgenommen. Innenseitig weist die Antriebswelle 18 zum Außenumfang der Durchgangswelle 11 einen radialen Spalt auf, in den sich von einer der Anordnung des Kettenritzels 43 entgegengesetzten Seite die Schaltwellen 19 und 20 teilweise hinein erstrecken. In oder an der Antriebswelle 18 sind die Schaltmittel 15 und 16 aufgenommen, sodass die Schaltmittel 15 und 16 mit der Rotation der Antriebswelle 18 um die Durchgangswelle 11 und insofern auch um die Schaltwellen 19 und 20 herum rotieren. Das Schaltmittel 17 ist am feststehenden Teil 48 aufgenommen. Das Schaltmittel 15 ist zu Zwecken der Ansicht in den Schnitt gedreht dargestellt und befindet sich eigentlich an einer auf dem Umfang um die Mittelachse 10 versetzten Position, wobei alle Schaltmittel 15, 16, 17 jeweils paarweise auf sich gegenüberliegenden Positionen vorhanden sind.

Mit den Schaltmittel 15, 16 und 17 können das erste, innere Planetengetriebe 12 und das äußere, zweite Planetengetriebe 13 mit deren einzelnen Komponenten beschaltet werden. Die Planetengetriebe 12 und 13 sind innerhalb des Gehäuses 32 der Getriebeeinheit 1 aufgenommen, wobei das Gehäuse 32 als Abtrieb der Getriebeeinheit 1 dient, während die Antriebswelle 18 als Antrieb dient.

Die Schalteinheit 14 weist einen Drehaktivator 21 auf, der mit den Schaltwellen 19 und 20 wirkverbunden ist und der von einem Bediener aktivierbar ist, um in die Schaltwelle 19, 20 eine schrittweise, gestufte Drehbewegung in diskreten Winkelschritten einzuleiten. Die schrittweise Drehbewegung in den Schaltwellen 19, 20 erfolgt dabei relativ zur ruhenden Durchgangswelle 11 und wird -wie später beschrieben- in eine Axialbewegung entlang der Mittelachse 10 umgewandelt.

Die Schaltwelle 19, 20 ist zweigeteilt ausgeführt und weist eine erste Schaltwelle 19 und eine zweite Schaltwelle 20 auf, wobei die erste und die zweite Schaltwelle 19, 20 zueinander drehstarr, jedoch axial beweglich eingerichtet sind.

Eine erste Komponente des Planetengetriebes 12, 13 bildet das Hohlrad 28 des äußeren, zweiten Planetengetriebes 13, wobei das Hohlrad 28 in ein erstes Teilrad 28a und in ein zweites Teilrad 28b unterteilt ist. Das erste Schaltmittel 15 oder ein Paar von ersten Schaltmittel 15 wirkt dabei mit dem Hohlrad 28, repräsentiert durch das erste Teilrad 28a, zusammen, um dieses bei Eingriff des Schaltmittels 15 drehstarr mit der Antriebswelle 18 zu verbinden. Eine weitere Komponente des Planetengetriebes 12, 13 wird durch den Planetenträger 29 repräsentiert, der Teil des inneren, ersten Planetengetriebes 12 ist, wobei das zweite Schaltmittel 16 oder ein Paar von zweiten Schaltmitteln 16 mit dem Planetenträger 29 zusammenwirkt, um diesen bei Eingriff drehstarr mit der Antriebswelle 18 zu verbinden.

Schließlich ist eine weitere beschaltbare Komponente der Planetengetriebe 12, 13 mittels des Sonnenrades 30 des ersten, inneren Planetengetriebes 12 repräsentiert, wobei das dritte Schaltmittel 17 mit dem Sonnenrad 30 zusammenwirkt, um dieses bei Eingriff drehstarr mit einem feststehenden Teil 48 der Getriebeeinheit 1 zu verbinden. Das Schaltmittel 17 ist insofern nicht an der Antriebswelle 18 aufgenommen, sondern an einem feststehenden Teil 48, das auch mehrgliedrig ausgebildet sein kann.

Das Gehäuse 32 der Getriebeeinheit 1 ist mittels Wälzlagern 44 am feststehenden Teil 48 und weiterhin über der Antriebswelle 18 drehbar gelagert, wobei das Gehäuse 32 als Abtriebselement dient. Dafür ist das Gehäuse 32 mit dem äußeren Planetenträger 33 des zweiten, äußeren Planetengetriebes 13 verbunden. Die Verbindung erfolgt durch den axialen Spalt zwischen den Teilrädern 28a und 28b des Hohlrades 28, sodass über den Umfang verteilt ein oder mehrere Stege des äußeren Planetenträgers 33 mit dem Gehäuse 32 wenigstens mittelbar, insbesondere über elastische Koppelelemente in Anordnung zwischen den Umfangspositionen der äußeren Planetenrädern 34 verbunden ist.

Der erste gezeigte Freilauf 35 bildet eine Wirkverbindung zwischen dem Hohlrad 28 des zweiten, außen liegenden Planetengetriebes 13 und dem feststehenden Teil 48. Der zweite gezeigte Freilauf 36 bildet eine Wirkverbindung zwischen dem Planetenträger 29 des ersten, innen liegenden Planetengetriebes 12 und dem feststehenden Teil 48, wobei ein dritter Freilauf 37 vorgesehen ist, der eine Wirkverbindung zwischen dem Sonnenrad 30 und der Antriebswelle 18 bildet.

Wird die Getriebeeinheit 1 in den Leerlauf N0 geschaltet, so sind alle Schaltmittel 15, 16 und 17 eingefahren und befinden sich in dieser Stellung nicht in Eingriff mit den Komponenten der Planetengetriebe 12, 13.

Für einen ersten Gang N1 wird lediglich das Schaltmittel 15 ausgefahren und in Eingriff mit dem Hohlrad 28 gebracht, während die weiteren Schaltmittel 16, 17 nicht in Eingriff stehen.

Für den zweiten Gang N2 wird nur das Schaltmittel 16 ausgefahren und in Eingriff mit dem Planetenträger 29 gebracht, während die Schaltmittel 15 und 17 eingefahren bleiben.

Für den dritten Gang N3 werden das Schaltmittel 15 und das Schaltmittel 17 mit dem Hohlrad 28 beziehungsweise mit dem Sonnenrad 30 in Eingriff gebracht.

Für den vierten Gang N4 bleibt das Schaltmittel 15 eingefahren, während die Schaltmittel 16 und 17 in Eingriff mit dem Planetenträger 29 und bzw. dem Sonnenrad 30 gebracht werden.

Für den fünften Gang N5 werden das Schaltmittel 15 und das Schaltmittel 16 ausgefahren, während das Schaltmittel 17 eingefahren bleibt.

Für den sechsten Gang N6 werden schließlich alle drei Schaltmittel 15, 16 und 17 ausgefahren und in Eingriff mit den jeweiligen Komponenten der Planetengetriebe 12, 13 gebracht.

Figur 4 stellt eine perspektivische Ansicht der Schalteinheit 14 mit den Schaltwellen 19 und 20 in Anordnung auf der Durchgangswelle 11 dar, wobei weiterhin der Drehaktivator 21 mit den Bowdenzügen 39 dargestellt ist.

Die Schaltwelle 19 weist eine Führungskulisse 22 auf, in der ein Führungselement 24 geführt ist. Das Führungselement 24 ist starr an der Durchgangswelle 11 angeordnet und durchwandert diese in quer zur Mittelachse 10. Die Führungskulisse 22 weist eine Zickzack-Kontur auf, sodass bei einer Verdrehung der Schaltwelle 19 mittels des Drehaktivators 21 eine richtungswechselnde Axialbewegung in die Schaltwelle 19 entlang der Mittelachse 10 eingeleitet wird.

Die Schaltwelle 20 ist zwar drehstarr, jedoch axial beweglich gegenüber der Schaltwelle 19 aufgenommen, sodass die Drehbewegung mittels des Drehaktivators 21 über die Schaltwelle 19 ebenfalls in die Schaltwelle 20 eingeleitet werden kann. Auch in der Schaltwelle 20 ist eine Führungskulisse 23 eingebracht, in der ebenfalls ein Führungselement 25 geführt ist, das starr an der Durchgangswelle 11 angebracht ist. Die Führungskulisse 23 weist ebenfalls eine Zickzack-Kontur auf, sodass durch die beiden Führungskulissen 22 und 23 die Schaltwellen 19 und 20 eine voneinander unabhängige Axialbewegung ausführen können, abhängig von der Rotationsposition der Schaltwellen 19 und 20, die schrittweise eingestellt wird durch den Drehaktivator 21. Die Schaltwelle 19 kann dabei mit dem Schaltmittel 16 und 17 zusammenwirken, während die Schaltwelle 20 mit dem Schaltmittel 15 zusammenwirken kann.

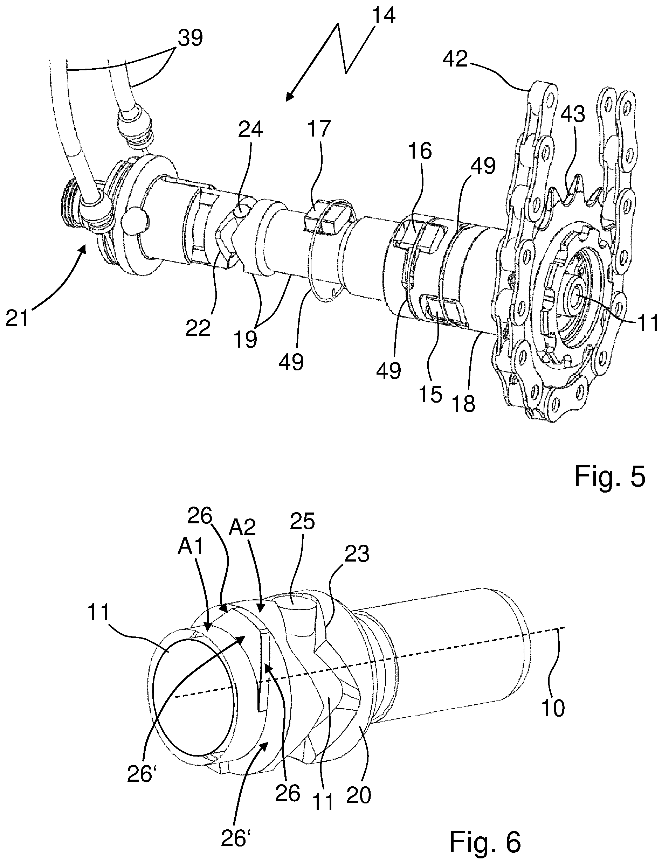

Figur 5 zeigt eine weitere perspektivische Ansicht der wesentlichen Komponenten des Schaltsystems 14, wobei nunmehr die Antriebswelle 18 gezeigt ist, die angetrieben wird durch die Kette 42 in Verbindung mit dem Kettelritzel 43. Dabei ist die Schaltwelle 20 innenliegend in der Antriebswelle 18 angeordnet und durch diese verdeckt, sodass nur die Schaltwelle 19 sichtbar ist.

In der Antriebswelle 18 sind die Schaltmittel 15 und 16 aufgenommen, die jeweils mit Spannfedern 49 so vorgespannt sind, dass die Schaltmittel 15, 16 ausgefahren sind und in die Komponenten der Planetengetriebe 12, 13 einrücken können. Gleiches gilt für das Schaltmittel 17, das ebenfalls mit einer Spannfeder 49 vorgespannt gezeigt ist und mit der gezeigten Schaltwelle 19 zusammenwirken kann, das Schaltmittel 17 ist jedoch nicht an der Antriebswelle 18 aufgenommen, sondern an dem nicht gezeigten feststehenden Teil 48.

Weiterhin gezeigt sind die Führungskulisse 22 in der Schaltwelle 19 mit dem Führungselement 24 an der Durchgangwelle 11, und die Schaltwelle 19 kann in der Rotationsposition und durch die Wirkung der Führungskulisse 22 auch in der Axialposition mittels des Drehaktivators 21 mit den Bowdenzügen 39 verstellt werden.

Figur 6 zeigt in einer Einzeldarstellung die Schaltwelle 20, die sich entlang der Mittelachse 10 verlagern lässt, indem diese auf der Durchgangswelle 11 verdrehbar angeordnet ist, und indem das Führungselement 25 in der Führungskulisse 23 verläuft, die Zickzack-förmig ausgeführt ist. Eine Drehung der Schaltwelle 20 um die Mittelachse 10 bewirkt folglich eine hin-und-her Verlagerung der Schaltwelle 20 auf der Durchgangswelle 11 entlang der Mittelachse 10.

Die Außenkontur der Schaltwelle 20 weist einen ersten Abschnitt A1 und einen zweiten Abschnitt A2 auf, wobei der Durchmesser des ersten Abschnittes A1 kleiner ist als der Durchmesser des zweiten Abschnittes A2. Die beispielhaft dargestellten Abschnitte A1, A2 in der Außenkontur der dargestellten Schaltwelle 20 sind auf der weiteren Schaltwelle 19 ebenfalls vorhanden, sodass die Schaltmittel 15, 16 und gegebenenfalls 17 mit den jeweils zugeordneten Abschnitten A1 und A2 auf den Schaltwellen 19, 20 zusammenwirken können. Die nachfolgende Beschreibung der Wirkungsweise der Abschnitte A1 und A2 treffen dabei auf alle Abschnitte zu, die den jeweiligen Schaltmittel zugeordnet sind und werden insofern nachfolgend allgemein am Beispiel Abschnitte A1 und A2 der Schaltwelle 20 beschrieben.

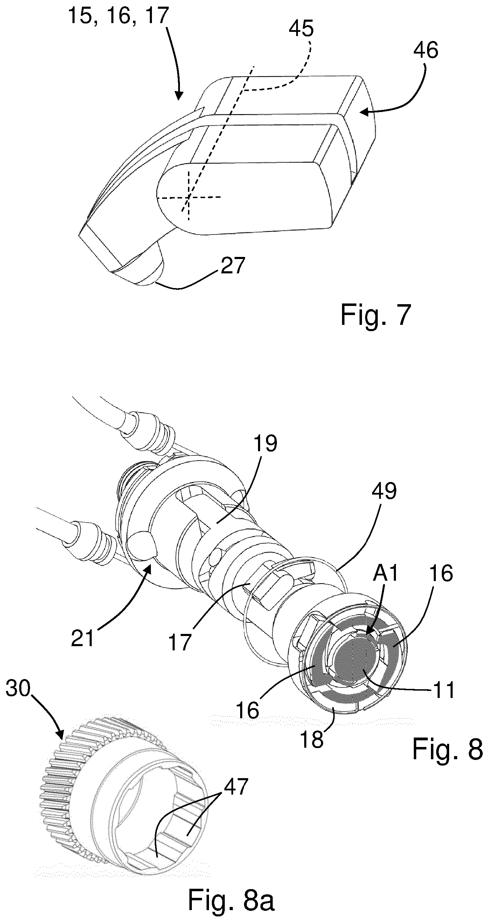

Läuft ein Abgriff 27, siehe Figur 7, der Schaltmittel 15, 16, 17 auf dem ersten Abschnitt A1 ab, so ist das Schaltmittel 15, 16, 17 ausgefahren, und in eine Komponente der Planetengetriebe 12, 13 eingerückt, was durch die jeweiligen Spannfedern 49 bewirkt wird. Wird die Schaltwelle 20 und auf gleiche Weise auch in nicht dargestellter Form die Schaltwelle 19 axial verlagert, indem diese mittels des Drehaktivators 21 um die Durchgangswelle 11 verdreht wird, so erzeugt die resultierende axiale Verlagerung einen Wechsel des Kontaktes des Abgriffes 27 des Schaltmittels 15, 16, 17 entgegen der Vorspannkraft der Spannfedern 49 vom ersten Abschnitt A1 auf den zweiten Abschnitt A2.

Die Überführung kann aufgrund der umlaufenden Bewegung des Abgriffs 27 entlang der Rampe 26 erfolgen, sodass der Abgriff 27 vom kleineren auf den größeren Durchmesser in gewisser Weise hochwandern kann. Dadurch, dass die Schaltwelle 20 lediglich die Kontur vorgibt, und die Schaltmittel 15, 16 durch die Rotation der Antriebswelle 18 um die Schaltwelle 19, 20 umlaufen, erfolgt ein Ausrücken des Eingriffs der Schaltmittel 15, 16 und damit ein Lösen der Kraftflusses aus der Komponente des Planetengetriebes 12, 13 auch unter Last problemlos, da das Ausrücken nicht mittels des Drehaktivators 21 und damit über die Bowdenzüge 39 eingeleitet werden muss, sondern das Ausrücken erfolgt durch die Antriebskraft zum Antrieb der Antriebswelle 18 selbst, mithin also über die Antriebsleistung. Der Kontakt der Schaltmittel 15, 16 und auch 17 mit den jeweils zugeordneten Abschnitten A1 und A2 wird dabei durch die Spannfeder 49 gehalten, die in Figur 5 für jede der Schaltmittel 15, 16, 17 gezeigt ist.

Die Rampe 26 ist als radial-umfangsseitige Rampe ausgebildet und kann den Abgriff des Schaltmittels aus dem Kontakt mit dem Abschnitt A1 kleineren Durchmessers lösen und in Kontakt mit dem Abschnitt A2 größeren Durchmessers überführen, wenn das Schaltmittel die Schaltwelle 20 mit der Rotation der Antriebswelle gewissermaßen umkreist. Steht die Antriebswelle still und nimmt der Abgriff bzw. das Schaltmittel eine feste Umfangsposition ein, so kann ein Wechsel zwischen dem Kontakt mit dem Abschnitt A1 und dem Kontakt mit dem Abschnitt A2 dennoch erfolgen, da die Schaltwelle 20 eine axial-radiale Rampe 26' aufweist, die neben und an der Stirnseite der eigentlichen Rampe 26 an der Schaltwelle 20 ausgebildet ist. Folglich kann ein Gangwechsel auch im Stehen erfolgen. Zumindest abschnittsweise ist dabei die axial-radiale Rampe 26' als Konus ausgebildet.

Es genügt mit Blick auf Figur 7 ein einfaches Verschwenken des Schaltmittels 15, 16, 17 um die Schwenkachse 45, um das Schaltmittel 15, 16, 17 zwischen den Schaltstellungen zu bewegen, wobei im Besonderen der Sperrabschnitt 46 auf der Stirnseite der Schaltmittel 15, 16, 17 so konvex konturiert ist, dass ein einfaches Ausrücken aus der eingeklinkten Stellung der Schaltmittel 15, 16, 17 aus der Komponente des Planetengetriebes 12, 13 einfach und mit minimaler Kraft erfolgen kann.

Figur 8 zeigt eine geschnittene Ansicht der Schalteinheit 14 mit der Antriebswelle 18 mit dem sich anschließenden Drehaktivator 21 in Wirkverbindung mit der Schaltwelle 19. Dargestellt sind das Schaltmittel 16 in 2-fach sich gegenüberliegender Anordnung, wobei das Schaltmittel 16 in der Antriebswelle 18 aufgenommen sind und über den ersten Abschnitt A1 der Schaltwelle 19 ablaufen. Das durch die Schnittansicht nicht gezeigte Schaltmittel 15 ist auf gleiche Weise in der Antriebswelle 18 aufgenommen, und das Schaltmittel 17 in Verbindung mit der Spannfeder 49 befindet sich nicht in Anordnung in oder an der Antriebswelle 18.

Figur 8a zeigt schließlich ein Sonnenrad 30 des ersten, inneren Planetengetriebes 12 mit innenliegenden Klinkentaschen 47, in die die Sperrabschnitte 46 des Schaltmittel 17 einrücken kann.

### Bezugszeichenliste:

- 1: Getriebeeinheit

- 10: Mittelachse
- 11: Durchgangswelle
- 12: Planetengetriebe
- 13: Planetengetriebe
- 14: Schaltsystem
- 15: Schaltmittel
- 16: Schaltmittel
- 17: Schaltmittel
- 18: Antriebswelle
- 19: Schaltwelle
- 20: Schaltwelle
- 21: Drehaktivator
- 22: Führungskulisse
- 23: Führungskulisse
- 24: Führungselement
- 25: Führungselement
- 26: Rampe
- 26': Rampe
- 27: Abgriff
- 28: Hohlrad
- 28a: erstes Teilrad
- 28b: zweites Teilrad
- 29: Planetenträger
- 30: Sonnenrad
- 31: Sonnenhohlrad
- 32: Gehäuse
- 33: äußerer Planetenträger
- 34: äußeres Planetenrad
- 35: erster Freilauf
- 36: zweiter Freilauf
- 37: dritter Freilauf
- 38: Mittel zur Aufnahme von Radspeichen
- 39: Bowdenzug
- 40: Befestigungsarm
- 41: Nabenschraube
- 42: Kette
- 43: Kettenritzel
- 44: Wälzlager
- 45: Schwenkachse
- 46: Sperrabschnitt
- 47: Klinkentasche
- 48: feststehender Teil
- 49: Spannfeder
- A1: erster Abschnitt
- A2: zweiter Abschnitt

## Patentansprüche

1. Schaltsystem (14) zur Beschaltung einer Getriebeeinheit (1), aufweisend wenigstens eine beweglich angeordnete Schaltwelle (19, 20) und mindestens ein Schaltmittel (15, 16), wobei über eine Bewegung der Schaltwelle (19, 20) relativ zum Schaltmittel (15, 16) die Schaltstellung des Schaltmittels (15, 16) änderbar ist, wobei eine um eine Mittelachse (10) rotierbare Antriebswelle (18) als Teil des Schaltsystems (14) so eingerichtet ist, dass diese in einer ersten Schaltstellung des Schaltmittels (15, 16) wenigstens in einer Drehrichtung mit einer Komponente der Getriebeeinheit (1) drehfest verbunden ist und in einer zweiten Schaltstellung des Schaltmittels (15) in jeder Drehrichtung mit der Komponente der Getriebeeinheit (1) entkoppelt ist, und wobei das Schaltmittel (15, 16) in Verbindung mit der Antriebswelle (18) derart eingerichtet ist, dass wenigstens ein Teil des Schaltmittels (15, 16) mit einer Rotation der Antriebswelle (18) um die Mittelachse (10) mitrotiert,
**dadurch gekennzeichnet,**
**dass** durch den mit der Antriebswelle (18) mitrotierenden Teil des Schaltmittels (15, 16) eine Relativbewegung des Schaltmittels (15, 16) zur Schaltwelle (19, 20) erzeugt wird, sodass die Bewegung des Schaltmittels (15, 16) zwischen der ersten und der zweiten Schaltstellung durch eine abgezweigte Kraft aus der Antriebsbewegung der Antriebswelle (18) erfolgt.

2. Schaltsystem (14) nach Anspruch 1,
**dadurch gekennzeichnet,**
**dass** zumindest der mit der Antriebswelle (18) rotierende Teil des Schaltmittels (15, 16) über mindestens einen mit der Schaltwelle (19, 20) in Kontakt bringbaren Abgriff (27) verfügt, wobei über die Bewegung der Schaltwelle (19, 20) der Abgriff (27) in Bezug auf die Mittelachse (10) axial und/oder radial verlagerbar ist, um das Schaltmittel (15, 16) in die zweite Schaltstellung zu bringen.

3. Schaltsystem (14) nach Anspruch 2,
**dadurch gekennzeichnet,**
**dass** die Schaltwelle (19, 20) mindestens eine Rampe (26) aufweist und/oder mit mindestens einer Rampe in Wechselwirkung steht, wobei der Abgriff (27) durch seine um die Mittelachse (10) umlaufende Bewegung in Kontakt mit der Rampe (26) in Bezug auf die Mittelachse (10) axial und/oder radial verlagerbar ist, wobei eine Verlagerung der Rampe (26) mittels der Bewegung der Schaltwelle (19, 20) erzeugbar ist.

4. Schaltsystem (14) nach Anspruch 3,
**dadurch gekennzeichnet,**
**dass** die Bewegungsrichtung, in welche die Schaltwelle (19, 20) die Rampe (26) in Kontakt mit dem Abgriff (27) bewegt und die Betätigungsrichtung des Abgriffs (27) des Schaltmittels (15, 16) senkrecht zueinander verlaufen.

5. Schaltsystem (14) nach einem der Ansprüche 2 bis 4,
**dadurch gekennzeichnet,**
**dass** die Schaltwelle (19, 20) derart ausgeführt ist, dass der Abgriff (27) des Schaltmittels (15, 16) mittels der Schaltbewegung der Schaltwelle (19, 20) unabhängig von der Drehbewegung der Antriebswelle (18) zwischen der ersten Schaltstellung und der zweiten Schaltstellung bewegbar ist, insbesondere mittels wenigstens einer axial-schräg ausgebildeten Rampe (26') an der Schaltwelle (19, 20).

6. Schaltsystem (14) nach einem der vorgenannten Ansprüche,
**dadurch gekennzeichnet,**
**dass** das Schaltmittel (15, 16) als Klauenkupplung, als Schaltklinke oder als Schaltklinkensystem ausgeführt ist.

7. Schaltsystem (14) nach einem der Ansprüche 3 bis 5,
**dadurch gekennzeichnet,**
**dass** der Schaltvorgang des Schaltmittels (15, 16) in die zweite Schaltstellung mittels des Kontaktes der Rampe (26) mit dem Abgriff (27) ausführbar ist und/oder dass eine Spannfeder (49) eingerichtet ist, die das Schaltmittel (15, 16) in die erste Schaltstellung drängt.

8. Schaltsystem (14) nach einem der Ansprüche 3 bis 7,
**dadurch gekennzeichnet,**
**dass** die Schaltwelle (19, 20) einen ersten Abschnitt (A1) mit einem kleineren Durchmesser und einen zweiten Abschnitt (A2) mit einem größeren Durchmesser aufweist, wobei das Schaltsystem (14) eingerichtet ist, dass der Wechsel zwischen den Schaltstellungen des Schaltmittels (15, 16) durch einen Kontaktwechsel des Schaltmittels (15, 16) und insbesondere des Abgriffes (27) über die Rampe (26) zwischen dem ersten Abschnitt (A1) und dem zweiten Abschnitt (A2) erfolgt.

9. Schaltsystem (14) nach einem der vorgenannten Ansprüche,
**dadurch gekennzeichnet,**
**dass** eine erste Schaltwelle (19) und eine zweite Schaltwelle (20) eingerichtet sind, die zueinander axial beweglich und drehstarr miteinander verbunden sind.

10. Schaltsystem (14) nach Anspruch 9,
**dadurch gekennzeichnet,**
**dass** eine Durchgangswelle (11) vorgesehen ist, die sich entlang der Mittelachse (10) erstreckt und auf der die erste und die zweite Schaltwelle (19, 20) aufgenommen sind, wobei die erste Schaltwelle (19) eine erste Führungskulisse (22) aufweist, in der ein erstes an der Durchgangswelle (11) angeordnetes Führungselement (24) geführt ist und/oder dass die zweite Schaltwelle (20) eine zweite Führungskulisse (23) aufweist, in der ein zweites an der Durchgangswelle (11) angeordnetes Führungselement (25) geführt ist, sodass die Axialpositionen der ersten und zweiten Schaltwelle (19, 20) entlang der Mittelachse (10) zueinander unabhängig sind.

11. Schaltsystem (14) nach einem der vorgenannten Ansprüche,
**dadurch gekennzeichnet,**
**dass** ein Drehaktivator (21) eingerichtet und mit der Schaltwelle (19, 20) wirkverbunden ist, wobei der Drehaktivator (21) von einem Bediener aktivierbar ist, um in die Schaltwelle (19, 20) eine Drehbewegung einzuleiten, wobei die wenigstens eine Schaltwelle (19, 20) drehfest und axial verschiebbar mit dem Drehaktivator (21) wirkverbunden ist.

12. Getriebeeinheit (1) aufweisend mindestens ein Schaltsystem (14) nach einem der vorgenannten Ansprüche, wobei die Getriebeeinheit (1) wenigstens ein Planetengetriebe (12, 13) umfasst, und wobei die Komponente des Planetengetriebes (12, 13), mit der die Antriebswelle (18) mittels des Schaltmittels (15, 16) in wenigstens einer Drehrichtung der Getriebeeinheit (1) drehfest verbindbar ist, als ein Hohlrad (28), als ein Planetenträger (29) und/oder als ein Sonnenrad (30) des wenigstens einen Planetengetriebes (12, 13) ausgeführt ist.

13. Getriebeeinheit (1) nach Anspruch 12,
**dadurch gekennzeichnet,**
**dass** zwei oder mehr miteinander und/oder ineinander verschachtelte Planetengetriebe (12, 13) eingerichtet sind, wobei das Hohlrad (28), der Planetenträger (29) und/oder das Sonnenrad (30) vom ersten und/oder vom wenigstens einen zweiten Planetengetriebe (12, 13) mittels des Schaltsystems (14) beschaltbar sind.

14. Getriebeeinheit (1) nach Anspruch 13,
**dadurch gekennzeichnet,**
**dass** zwei ineinander verschachtelte Planetengetriebe (12, 13) eingerichtet sind, wobei ein erster Freilauf (35) vorgesehen ist, der eine Wirkverbindung zwischen dem Hohlrad (28) des zweiten, außen liegenden Planetengetriebes (13) und einem feststehendem Teil (48) der Getriebeeinheit (1) bildet und/oder dass ein zweiter Freilauf (36) vorgesehen ist, der eine Wirkverbindung zwischen dem Planetenträger (29) des ersten, innen liegenden Planetengetriebes (12) und dem feststehendem Teil (48) bildet und/oder dass ein dritter Freilauf (37) vorgesehen ist, der eine Wirkverbindung zwischen dem Sonnenrad (30) des ersten, innen liegenden Planetengetriebes (12) und der Antriebswelle (18) bildet.

## Claims

1. A shift system (14) for shifting a gear unit (1) comprising at least one movably arranged selector shaft (19, 20) and at least one selection means (15, 16), wherein the selected position of the selection means (15, 16) is variable relative to the selection means (15, 16) by a movement of the selector shaft (19, 20), and wherein a drive shaft (18) rotatable about a center axis (10) is configured as part of the shift system (14) such that it is rotationally fixedly connected to a component of the gear unit (1) in at least one direction of rotation in a first selected position of the selection means (15, 16) and is disconnectable from the component of the gear unit (1) in any direction of rotation in a second selected position of the selection means (15),
and whereas the selection means (15, 16) is configured in conjunction with the drive shaft (18) such that at least a portion of the selection means (15, 16) corotates about the center axis (10) with a rotation of the drive shaft (18),
**characterized in that**
the relative movement of the selection means (15, 16) relative to the selector shaft (19, 20) is induced by the part of the selection means (15, 16) rotating with the drive shaft (18), so that the movement of the selection means (15, 16) between the first and the second selected position is effected by a force branched off from the drive movement of the drive shaft (18).

2. A shift system (14) in accordance with claim 1,
**characterized in that**
at least the part of the selection means (15, 16) rotating with the drive shaft (18) has at least one gripper (27) that can be moved into contact with the selector shaft (19, 20), with the gripper (27) being axially and/or radially displaceable with respect to the center axis (10) by the movement of the selector shaft (19, 20) to move the selection means (15, 16) into the second selected position.

3. A shift system (14) in accordance with claim 2,
**characterized in that**
the selector shaft (19, 20) has at least one ramp (26) and/or interacts with at least one ramp, with the gripper (27) being axially and/or radially displaceable with respect to the center axis (10) by its movement circulating about the center axis (10) in contact with the ramp (26), with a displacement of the ramp (26) being able to be induced by means of the movement of the selector shaft (19, 20).

4. A shift system (14) in accordance with claims 3,
**characterized in that**
the direction of movement in which the selector shaft (19, 20) moves the ramp (26) in contact with the gripper (27) and the direction of actuation of the gripper (27) of the selector shaft (15, 16) extend perpendicular to one another.

5. A shift system (14) in accordance preceding claims 2 to 4,
**characterized in that**
the selector shaft (19, 20) or is designed such that the gripper (27) of the selection means (15, 16) is movable between the first selected position and the second selected position by means of the selection movement of the selector shaft (19, 20) independently of the rotational movement of the drive shaft (18), in particular by means of at least one ramp (26) formed axially slantingly at the selector shaft (19, 20).

6. A shift system (14) in accordance with one of the preceding claims,
**characterized in that**
the selection means (15, 16) is designed as a dog clutch, as a shift pawl, or as a shift pawl system.

7. A shift system (14) in accordance with one of the claims 3 to 5,
**characterized in that**
the selection procedure of the selection means (15, 16) into the second selected position can be carried out by means of the contact of the ramp (26) with the gripper (27); and/or **in that** a tension spring (49) is configured that urges the selection means (15, 16) into the first selected position.

8. A shift system (14) in accordance with one of the claims 3 to 7,
**characterized in that**
the selector shaft (19, 20) has a first section (A1) having a smaller diameter and a selected section (A2) having a larger diameter, whereas the shift system (14) is configured that the change between the switched positions of the selection means (15, 16) taking place by a change of contact of the selection means (15, 16) and in particular of the gripper (27) via the ramp (26) between the first section (A1) and the second section (A2).

9. A shift system (14) in accordance with one of the preceding claims,
**characterized in that**
a first selector shaft (19) and a second selector shaft (20) are configured that are connected to one another axially movably and rotationally rigidly.

10. A shift system (14) in accordance with claim 9,
**characterized in that**
a passage shaft (11) is provided that extends along the center axis (10) and on which the first and second selector shafts (19, 20) are received, with the first selector shaft (19) having a first guide link (22) in which a first guide element (24) arranged at the passage shaft (11) is guided; and/or **in that** the second selector shaft (20) has a second guide link (23) in which a second guide element (25) arranged at the passage shaft (11) is guided so that the axial positions of the first and/or second selector shafts (19, 20) are independent of one another along the center axis (10).

11. A shift system (14) in accordance with one of the preceding claims,
**characterized in that**
a rotational activator (21) is configured and is operatively connected to the selector shaft (19, 20), with the rotational activator (21) being actuable by an operator to initiate a rotational movement in the selector shaft (19, 20), with the at least one selector shaft (19, 20) being operatively connected rotationally fixedly and axially displaceably to the rotational activator (21).

12. A gear unit (1) having at least one shift system (14) in accordance with one of the preceding claims, wherein the gear unit (1) comprises at least one planetary gear (12, 13), and wherein the component of the planetary gear (12, 13) to which the drive shaft (18) is rotationally fixedly connectable in at least one direction of rotation of the gear unit (1) by means of the selection means (15, 16) is designed as an annulus gear (28), as a planetary carrier (29), and/or as a sun gear (30) of the at least one planetary gear (12, 13).

13. A gear unit (1) in accordance with claim 12,
**characterized in that**
two or more planetary gears (12, 13) nested with one another and/or in one another are configured, with the annulus gear (28), the planetary carrier (29), and/or the sun gear (30) being shiftable by the first and/or at least one second planetary gear (12, 13) by means of the shift system (14).

14. A gear unit (1) in accordance with claim 13,
**characterized in that**
two interleaved planetary gears (12, 13) are arranged to each other, wherein a first freewheel (35) is provided that forms an operative connection between the annulus gear (28) of the second, outwardly disposed planetary gear (13) and a fixedly stationary part (48) of the gear unit (1); and/or **in that** a second freewheel (36) is provided that forms an operative connection between the planetary carrier (29) of the first, inwardly disposed planetary gear (12) and the fixedly stationary part (48); and/or **in that** a third freewheel (37) is provided that forms an operative connection between the sun gear (30) of the first, inwardly disposed planetary gear (12) and the drive shaft (18).

## Revendications

1. Système de commutation (14) pour le couplage d'une unité de transmission (1), présentant au moins un arbre de commutation (19, 20) disposé de manière mobile et au moins un moyen de commutation (15, 16), la position de commutation du moyen de commutation (15, 16) pouvant être modifiée par un mouvement de l'arbre de commutation (19, 20) par rapport au moyen de commutation (15, 16), un arbre d'entraînement (18) pouvant tourner autour d'un axe central (10) étant aménagé en tant que partie du système de commutation (14) de telle sorte que, dans une première position de commutation du moyen de commutation (15, 16), cet arbre d'entraînement (18) peut être déplacé dans une deuxième position de commutation, 16) est relié solidairement en rotation à un composant de l'unité de transmission (1) au moins dans un sens de rotation et, dans une deuxième position de commutation du moyen de commutation (15), est découplé du composant de l'unité de transmission (1) dans chaque sens de rotation, et dans lequel le moyen de commutation (15, 16) est agencé en liaison avec l'arbre d'entraînement (18) de telle sorte qu'au moins une partie du moyen de commutation (15, 16) tourne avec une rotation de l'arbre d'entraînement (18) autour de l'axe central (10),
**caractérisé en ce que**
**en ce que** la partie du moyen de commutation (15, 16) tournant avec l'arbre d'entraînement (18) produit un mouvement relatif du moyen de commutation (15, 16) par rapport à l'arbre de commutation (19, 20), de sorte que le mouvement du moyen de commutation (15, 16) entre la première et la deuxième position de commutation s'effectue par une force dérivée du mouvement d'entraînement de l'arbre d'entraînement (18).

2. système de commutation (14) selon la revendication 1,
**caractérisé en ce que**
qu'au moins la partie du moyen de commutation (15, 16) tournant avec l'arbre d'entraînement (18) dispose d'au moins une prise (27) pouvant être mise en contact avec l'arbre de commutation (19, 20), la prise (27) pouvant être déplacée axialement et/ou radialement par rapport à l'axe central (10) par le biais du mouvement de l'arbre de commutation (19, 20), afin d'amener le moyen de commutation (15, 16) dans la deuxième position de commutation.

3. système de commutation (14) selon la revendication 2,
**caractérisé en ce que**
que l'arbre de commutation (19, 20) présente au moins une rampe (26) et/ou interagit avec au moins une rampe, la prise (27) pouvant être déplacée axialement et/ou radialement par rapport à l'axe médian (10) par son mouvement tournant autour de l'axe médian (10) en contact avec la rampe (26), un déplacement de la rampe (26) pouvant être généré au moyen du mouvement de l'arbre de commutation (19, 20).

4. système de commutation (14) selon la revendication 3,
**caractérisé en ce que**
**en ce que** la direction de déplacement dans laquelle l'arbre de commutation (19, 20) déplace la rampe (26) en contact avec la prise (27) et la direction d'actionnement de la prise (27) du moyen de commutation (15, 16) sont perpendiculaires entre elles.

5. Système de commutation (14) selon l'une quelconque des revendications 2 à 4,
**caractérisé en ce que**
que l'arbre de commutation (19, 20) est réalisé de telle sorte que la prise (27) du moyen de commutation (15, 16) peut être déplacée entre la première position de commutation et la deuxième position de commutation au moyen du mouvement de commutation de l'arbre de commutation (19, 20) indépendamment du mouvement de rotation de l'arbre d'entraînement (18), en particulier au moyen d'au moins une rampe (26') réalisée de manière axialement oblique sur l'arbre de commutation (19, 20).

6. Système de commutation (14) selon l'une quelconque des revendications précédentes,
**caractérisé en ce que**
que le moyen de commutation (15, 16) est réalisé sous la forme d'un accouplement à griffes, d'un cliquet de commutation ou d'un système de cliquet de commutation.

7. Système de commutation (14) selon l'une quelconque des revendications 3 à 5,
**caractérisé en ce que**
**en ce que** l'opération de commutation du moyen de commutation (15, 16) dans la deuxième position de commutation peut être exécutée au moyen du contact de la rampe (26) avec la prise (27) et/ou **en ce qu'**un ressort de tension (49) est aménagé, qui pousse le moyen de commutation (15, 16) dans la première position de commutation.

8. Système de commutation (14) selon l'une quelconque des revendications 3 à 7,
**caractérisé en ce que**
**en ce que** l'arbre de commutation (19, 20) présente un premier tronçon (A1) de plus petit diamètre et un deuxième tronçon (A2) de plus grand diamètre, le système de commutation (14) étant agencé de telle sorte que le changement entre les positions de commutation du moyen de commutation (15, 16) s'effectue par un changement de contact du moyen de commutation (15, 16) et en particulier de la prise (27) via la rampe (26) entre le premier tronçon (A1) et le deuxième tronçon (A2).

9. Système de commutation (14) selon l'une quelconque des revendications précédentes,
**caractérisé en ce que**
qu'un premier arbre de commutation (19) et un deuxième arbre de commutation (20) sont aménagés, lesquels sont reliés l'un à l'autre de manière axialement mobile et rigide en rotation.

10. Système de commutation (14) selon la revendication 9,
**caractérisé en ce que**
**en ce qu'**il est prévu un arbre de passage (11) qui s'étend le long de l'axe médian (10) et sur lequel sont logés le premier et le deuxième arbre de commutation (19, 20), le premier arbre de commutation (19) présentant une première coulisse de guidage (22), dans laquelle est guidé un premier élément de guidage (24) disposé sur l'arbre de passage (11) et/ou **en ce que** le deuxième arbre de commutation (20) présente une deuxième coulisse de guidage (23) dans laquelle est guidé un deuxième élément de guidage (25) disposé sur l'arbre de passage (11), de sorte que les positions axiales du premier et du deuxième arbre de commutation (19, 20) le long de l'axe central (10) sont indépendantes l'une de l'autre.

11. Système de commutation (14) selon l'une quelconque des revendications précédentes,
**caractérisé en ce que**
qu'un activateur rotatif (21) est aménagé et relié fonctionnellement à l'arbre de commutation (19, 20), l'activateur rotatif (21) pouvant être activé par un opérateur afin d'introduire un mouvement de rotation dans l'arbre de commutation (19, 20), l'au moins un arbre de commutation (19, 20) étant relié fonctionnellement à l'activateur rotatif (21) de manière solidaire en rotation et déplaçable axialement.

12. Unité de transmission (1) présentant au moins un système de changement de vitesse (14) selon l'une des revendications précédentes, dans laquelle l'unité de transmission (1) comprend au moins un engrenage planétaire (12, 13), et dans laquelle le composant de l'engrenage planétaire (12, 13), avec lequel l'arbre d'entraînement (18) peut être relié solidairement en rotation dans au moins un sens de rotation de l'unité de transmission (1) au moyen du moyen de commutation (15, 16), est réalisé sous la forme d'une couronne (28), d'un porte-satellites (29) et/ou d'une roue solaire (30) de l'au moins un engrenage planétaire (12, 13).

13. Unité de transmission (1) selon la revendication 12,
**caractérisé en ce que**
que deux ou plusieurs engrenages planétaires (12, 13) imbriqués les uns dans les autres et/ou les uns avec les autres sont aménagés, la couronne (28), le porte-satellites (29) et/ou la roue solaire (30) pouvant être enclenchés par le premier et/ou par le au moins un deuxième engrenage planétaire (12, 13) au moyen du système de commutation (14).

14. Unité de transmission (1) selon la revendication 13,
**caractérisé en ce que**
**en ce que** deux engrenages planétaires (12, 13) imbriqués l'un dans l'autre sont aménagés, une première roue libre (35) étant prévue, qui forme une liaison active entre la couronne (28) du deuxième engrenage planétaire (13) situé à l'extérieur et une partie fixe (48) de l'unité d'engrenage (1) et/ou **en ce qu'**une deuxième roue libre (36) est prévue, qui forme une liaison active entre le porte-satellites (29) du premier engrenage planétaire (12) situé à l'intérieur et la partie fixe (48) et/ou **en ce qu'**il est prévu une troisième roue libre (37) qui forme une liaison active entre la roue solaire (30) du premier engrenage planétaire (12) situé à l'intérieur et l'arbre d'entraînement (18).
